# EUROPÄISCHE PATENTSCHRIFT

(11) **EP 0 436 124 B1**
(45) Veröffentlichungstag und Bekanntmachung des Hinweises auf die Patenterteilung: **01.12.1993**
(21) Anmeldenummer: 90122923.7
(22) Anmeldetag: 30.11.1990
(51) Int. Cl.: C02F 3/10, B01D 53/34

(54) **Filterkörper und Verfahren zur Herstellung eines Filterkörpers**
Filter body and process for its manufacture
Corps de filtre et son procédé de fabrication

(30) Priorität: 05.01.1990 DE 4000193
(43) Veröffentlichungstag der Anmeldung: 10.07.1991
(73) Patentinhaber: H. Diekmann Gmbh & Co. KG, D-31275 Lehrte (DE)
(72) Erfinder: Diekmann, Heinrich, W-3160 Lehrte OT Arpke (DE); Jacobi, Friedhelm, W-3000 Hannover 1 (DE)
(74) Vertreter: Thömen, Uwe, Dipl.-Ing.

(56) Entgegenhaltungen:
- EP-A- 0 209 789
- WO-A-85/04817
- DE-B- 2 804 154
- DE-C- 3 411 228
- DATABASE WPI, accession no. 78-03079A [02], Derwent Publications Ltd, London, GB; & JP-A-52 140 539 (T. ISHIKAWA)

## Beschreibung

Die Erfindung betrifft einen Filterkörper nach dem Oberbegriff des Anspruchs 1.

Bei der industriellen Produktion und in der Landwirtschaft fallen Abwässer und Abluft an, die mit Schadstoffen belastet sind. Wenn diese Schadstoffe in die Umwelt gelangen, werden Umweltschäden angerichtet, die kurzfristig oder sogar auch über längere Zeit irreparabel sein konnen. Gelingt es nicht, das Entstehen dieser Schadstoffe zu verhindern, so muß wenigstens versucht werden, die Schadstoffe wieder aus den Medien, in denen sie enthalten Sind, also dem Abwasser oder der Luft zu entfernen.

Es gibt bereits Verfahren zur Abscheidung von Schadstoffen aus Medien, also Abwasser oder Abluft, bei welchen ein chemisch und/oder biologisch aktiver Stoff dem Medium beigefügt wird, der die Eigenschaft hat, die Schadstoffe an sich zu binden und auszufallen. In Kläranlagen z.B. verunreinigen die ausgefällten Stoffe den Klärschlamm. Häufig kann der Klarschlamm dann nicht mehr als Dunger benutzt werden, weil die Schadstoffkonzentration, besonders die der Schwermetalle (SM) , zu hoch sind. In solchen Fällen wird der Klarschlamm verbrannt oder deponiert. Damit geht der Volkswirtschaft eine große Menge an wertvollem biologischem Dünger verloren.

Durch die EP-A-0 209 789 ist ein Verfahren zum Beseitigen von suspendierten, emulgierten und/oder kolloidal gelösten festen oder flüssigen Verunreinigungen aus Gemischen von Wasser mit mit Wasser mischbaren Lösungsmitteln bekannt. Dabei bringt man die zu reinigenden Gemische unter Verwendung eines Filterkörpers mit zumindest teilweise offenzelligen Schaumstoffen in Kontakt, welche adsorbierend wirkende pulverförmige Zusatzstoffe in eine Menge von 1 bis 75 Gew.-%, bezogen auf die gesamt betroffene Substanz mittels eines polymeren Bindemittels fixiert oder eingebaut enthalten und anschließend die flüssige Phase von der festen Phase trennt.

In der DE-C-3 411 228 sind ein Verfahren zur umweltfreundlichen Reinigung von photographischem Waschwasser aus Filmverarbeitungsmaschinen sowie eine Vorrichtung zur Durchführung des Verfahrens beschrieben. Das Waschwasser wird durch einen offenporigen Polyurethanschaum mit 60 - 80 Gew.-% Eisenpulver mit einer Teilchengröße von 20 - 200 µm geleitet, wobei die Kontaktzeit mit dem Eisenpulver mindestens 30 Sekunden beträgt und der PH-Wert des gereinigten Waschwassers nicht über 7,5 steigt.

Die bekannte Vorrichtung zur Durchführung des Verfahrens umfaßt einen Reaktionsbehälter, welcher den genannten offenporigen Polyurethanschaum und das erwähnte Eisenpulver enthält.

Schließlich ist durch die DE-B-2 804 154 noch ein Filtermaterial aus einem offenporigen flexiblen Schaumstoffträger und von dessen Porenwänden getragenen Adsorberpartikeln bekannt, bei welchem in die Poren des Schaumstoffträgers zusätzlich poröse Adsorberkörner eingelagert sind. Der Schaumstoffträger wird aus Polyurethanschaumstoff gebildet.

Der voranstehend geschilderte Stand der Technik offenbart jedoch keine Filterkörper aus Ton mit Zement oder Kalk, das mit Eisenstaub kleiner als 200 µm versetzt, aufgeschäumt und gehärtet ist. Vielmehr wird beim Stand der Technik als Trägerkörper für den Filterkörper Polyurethanschaum verwendet. Dabei besteht der Nachteil, daß das eingebundene Eisenpulver nicht nur durch die Ionen, die dem Wasser entzogen werden sollen, sondern auch durch den im Wasser befindlichen Sauerstoff oxidiert wird, wodurch sich das Material sehr schnell verbraucht.

Bei der Verwendung von Polyurethanschaum ist es deshalb erforderlich, dem Trägermaterial Injibitoren beizufügen, welche ein Oxidieren des Eisenpulvers aufgrund des im Wasser befindlichen Sauerstoffs verhindern sollen und nur die Oxidation aufgrund der Ionen zulassen.

Der Erfindung liegt die Aufgabe zugrunde, einen Filterkörper zu schaffen, welcher eine wirksamere Ausfällung von Schadstoffen in Abwässern bewirkt und gleichzeitig einen einfachen Aufbau besitzt und damit in der Herstellung und im Gebrauch kostengünstig und einfach zu bedienen ist.

Diese Aufgabe wird bei einem Filterkörper nach dem Oberbegriff des Anspruchs 1 durch die im kennzeichnenden Teil angegebenen Merkmale gelöst.

Die Wirkungsweise des erfindungsgemaßen Filterkörpers beruht auf der durch die Porenkanäle erzeugten extrem großen Oberfläche, die sich als aktive Reinigungsschicht fur die verunreinigten Medien darstellt. Das schadstoffbefrachtete Medium wird auf den Wegen durch die Porenkanäle in unmnittelbarer Nähe an den aktiven Substanzen vorbeigeführt, so daß die Wahrscheinlichkeit einer Beruhrung und damit einer entsprechenden Reaktion in Form einer Adsorption an diese Substanzen sehr hoch ist.

Handelt es sich bei den aktiven Substanzen z.B. um Eisen und bei den Verunreinigungen um Ionen von Edelmetallen, so finden durch die zwangslaufig gegebene Nähe beim Vorbeiströmen Redox-Prozesse statt, die das Zustandekommen von Reaktionen begünstigt, welche zur Folge haben, daß Schwermetalle dem wässerigem Medium durch Ausfällung und Adsorption schnell und effektiv entzogen werden.

Bei der Erfindung besteht der Trägerkörper des Filterkörpers aus Ton oder aus Gips, Quarzmehl, Glasmehl, Glas und Zuschlagstoffen, z.B. Zement und/oder Kalk.

Diese Stoffe besitzen im ausgehärteten Zustand eine sehr hohe Festigkeit, verhalten sich fur die meisten Verunreinigungen in wässrigen Medien nicht chemisch neutral, sondern unterstützen durch einen leicht alkalischen pH-Wert die Ausfällung der SM und tragen somit zur Reinigung der Abwässer ihren vorgesehenen aktiven Teil bei. Außerdem sind diese Stoffe in ausreichender Menge vorhanden und sorgen deshalb bei der Herstellung als Filterkörper nicht selbst für eine unzumutbare Umweltbelastung.

Außerdem ist der Trägerkörper zur Porenbildung aufgebläht bzw. aufgeschäumt. Dadurch entsteht aus dem eingesetzten Material ein Stoff mit extrem großer Oberfläche bei dünnen aber dennoch stabilen Wandungen.

Als chemisch aktive Substanz wird Eisenstaub verwendet. Diese Substanz besitzt den Vorteil, daß sie selbst ungiftig ist, in genügender Menge zur Verfügung steht und zudem sich chemisch sehr aktiv gegenüber den meisten Verunreinigungen, insbesondere Schwermetallen erwiesen hat.

Für den Einsatz als chemisch aktive Substanz eignet sich Eisenstaub einer Korngröße von kleiner als 20̸0̸ µm.

Bei dieser Korngröße lassen sich die Staubteilchen noch fest in die Wandungen des Trägerkörpers einbinden, zum anderen bekommen sie im Vergleich zu ihrem Volumen eine große Oberfläche wenn der Verrostungsprozeß beginnt, die bei einer entsprechenden Konzentration im Trägerkörper zu einer seht ausgedehnten reaktionsaktiven Oberfläche führt.

Eine Weiterbildung sieht vor, daß neben den eingelagerten Substanzen auch frei bewegliche chemisch aktive Substanzen, wie Kupfersalze und/oder Sauerstoff mit dem zu filternden Stoff eingebracht werden.

Diese Hilfssubstanzen haben sich als besonders wirkungsvoll im Zusammenhang mit Eisenstaub erwiesen, da sie sowohl Ausfällung wie auch Adsorption vorzugsweise der Schwermetalle durch das Eisen beschleunigen.

Bei einer großen Schwankungsbreite von Schwermetallverunreinigungen läßt sich durch die variable Zugabe der aktiven Substanzen eine noch wirksamere Steuerung (Beschleunigung) der Adsorption und Ausfäliung herbeiführen.

Die Erfindung betrifft ferner ein Verfahren zur Herstellung eines Filterkörpers nach dem Oberbegriff des Anspruchs 5.

Diesbezüglich liegt ihr die Aufgabe zugrunde, ein Verfahren anzugeben, welches eine kostengunstige, umweltverträgliche Herstellung von hochwirksamen Filterkörpern zur Reinigung kontaminierter Medien ermöglicht.

Diese Aufgabe wird durch die Anspruch 5 genannten Merkmale gelöst.

Durch das Aufblähen des mit den chemisch und/oder biologisch aktiven Substanzen versetzten Grundstoffgemisches entsteht nach dem Aushärten ein poröser Körper, in dessen Wandungen der Porenkanäle die aktiven Substanzen fixiert sind. Dabei werden durch das Aufblähen extrem dünne Wände gebildet, so daß die aktiven Teilchen nicht eingeschlossen werden, sondern aus den Wänden herausragen. Die Oberfläche, an der die Medien vorbeistreichen müssen, wird etwa um den Faktor 3 x 10̸⁴ vergrößert. Das hat den Vorteil, daß bei einem kleinen Volumen des Filterkörpers eine sehr hohe Reinigungswirkung erzielt werden kann.

Um das Aufblähen zu ermoglichen, sind technisch mehrere alternative Verfahrensschritte möglich, die aber auch miteinander kombiniert werden können. So sieht eine Alternative vor, dem Grundstoffgemisch Aluminiumpulver im Mengenanteil von vorzugsweise 0̸,5 % beizugeben. Eine andere Möglichkeit besteht darin, daß Grundgemisch einer Mikrowellenbestrahlung auszusetzen. Dabei findet eine über den aufzublähenden Trägerkörper gleichmäßig verteilte Erwärmung statt, die zu einer (ähnlich der Al-Variante) homogenen Porenbildung führt.

Weil das Wasser bei Zimmertemperatur auch durch Druckabsenkung zum Kochen gebracht werden kann, kann das Aufblähen auch durch Anlegen von Vakuum erfolgen.

Schließlich läßt sich die Ausbeute an Poren bei Anwendung der vorgenannten Verfahren noch durch Zugabe geringer Mengen an Wasserglas wesentlich erhöhen.

Weiterbildungen und vorteilhafte Ausgestaltungen der Erfindung ergeben sich aus den Ansprüchen, der Beschreibung und der Zeichnung, die ein Ausführungsbeispiel veranschaulicht.

In der Zeichnung zeigen:
- Fig. 1: ein Prinzipschaltbild einer Abwasserreinigungsanlage mit dem erfindungsgemäßen Filterkörper,
- Fig. 2: einen Schnitt durch einen Filterkörper in extremer Vergrößerung mit Darstellung der aktiven Substanzen, und

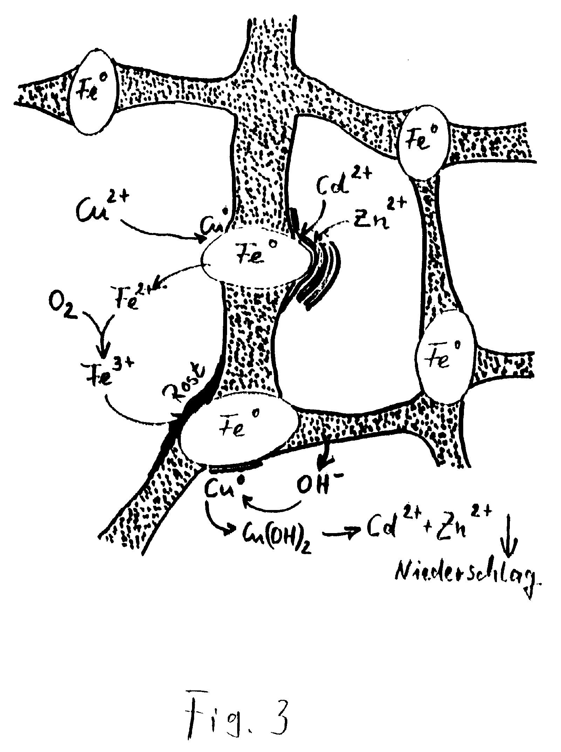

- Fig. 3: einen anderen Schnitt entsprechend Fig. 2.

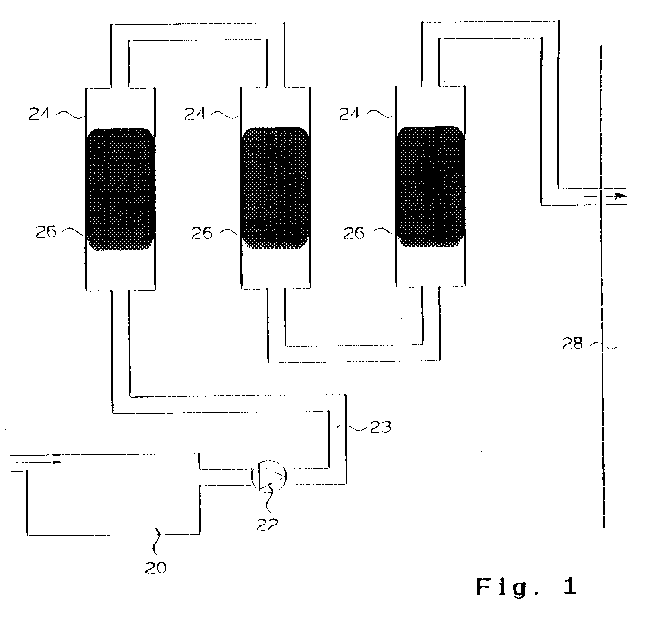

Die in Fig. 1 dargestellte Reinigungsanlage umfaßt ein Sammelbecken 20̸ für Abwasser, eine Pumpe 22, Schmutzwasserleitungen 23 und Perkolationssäulen 24. In den Perkolationssäulen 24 befinden sich Einsätze aus den erfindungsgemäßen Filterkörpern 26. Der Auslauf der Schmutzwasserleitung 23 hinter der letzten Perkolationssäule mündet in einen Abwasserkanal 28.

Das verunreinigte Abwasser gelangt also z.B. von der letzten Reinigungsstufe einer bisher üblichen Kläranlage in ein Sammelbecken 20̸ und wird mittels der Pumpe 22 durch die Schmutzwasserleitungen 23 in die Perkolationssäulen 24 gepumpt. Hier findet nun eine Abscheidung der noch im Wasser befindlichen Verunreinigungen, insbesondere der Schwermetalle statt. Das gereinigte Wasser gelangt dannn in den Abwasserkanal 28. Durch eine entsprechende Kaskadierung und Steuerung der Filter kann der Schwermetallgehalt soweit reduziert werden, daß nahezu Trinkwasserqualität erzielt wird.

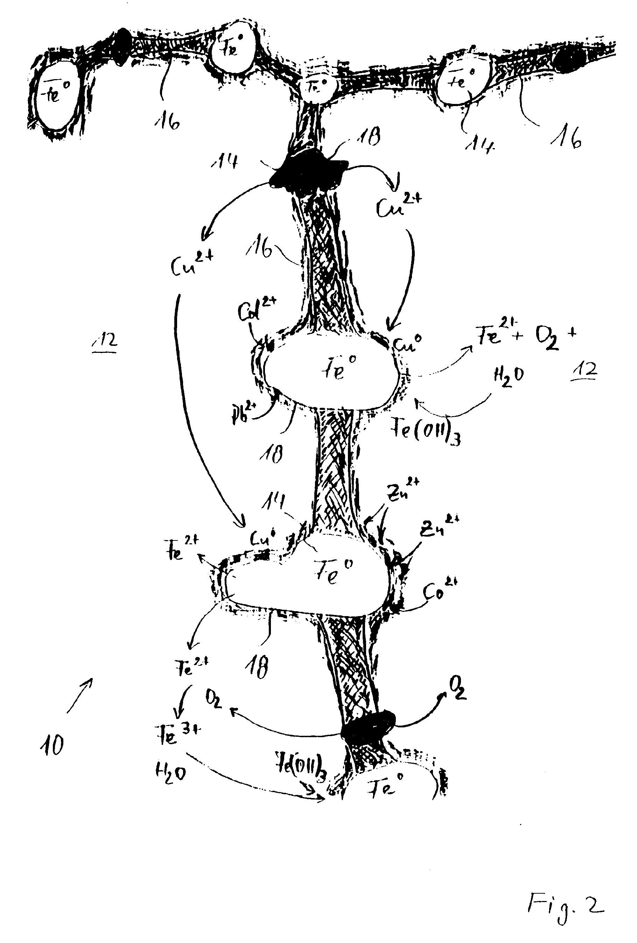

Fig. 2 zeigt einen Querschnitt durch einen Filterkörper nach der Erfindung. Es handelt sich hierbei um eine stark vergrößerte Darstellung, die sich auf drei angeschnittene Wandungen 16, welche Porenkanäle 12 innerhalb eines Trägerkörpers 10̸ begrenzen, beschränkt. Innerhalb der Wandungen 16 der Porenkanäle 12 sind chemisch aktive Substanzen 14 angelagert, die mit einem Teil ihrer Oberfläche 18 freiliegen, d.h., also in den Porenkanal oder beide Porenkanäle 12 hineinragen.

Der Trägerkörper 10̸ besteht aus Ton mit Zuschlagstoffen, wie z.B. Zement oder Kalk, die als Bindemittel dienen. Durch Aufblähen des Trägerkörpers 10̸ wird die Porenstruktur erreicht, die die Oberfläche erheblich vergrößert. So entstehen aus einem cm³ Ton mit einer Fläche von 6 cm² Porenkanäle 12 mit Wandungen 16 einer Fläche von größer/gleich 20̸0̸ m² .

Durch das Aufblähen werden gleichzeitig die Wandungen gestreckt, so daß die Wandstärke stark vermindert wird. Dadurch wird erreicht, daß auch extrem kleine aktive Substanzen 14 so angelagert oder eingelagert werden können, daß sie noch mit einem Teil ihrer Oberfläche 18 aus der Wandung 16 vorstehen. Die Wandung 16 dient also als Halterung für die aktiven Substanzen 14, soll sie jedoch nicht ummanteln.

Im vorliegenden Fall dient Eisenstaub als chemisch aktive Substanz 14, wobei die Korngröße kleiner als 10̸ µm ist. Bei der Herstellung des Filterkörpers mit Eisen als aktiver Substanz 14 bildet sich auf der Oberfläche der Eisenstaubteilchen bereits eine Rostschicht. Dieser Effekt ist durchaus wünschenswert, zumal sich Schwermetalle gern an Eisenhydroxid-Oxide und Eisenoxide anlagern.

Die Wirkungsweise des Filterkörpers in der hier vorgesehenen Ausgestaltung beruht darauf, daß Schwermetalle sich gerne an Eisenoxide anlagern und mit der Zeit in deren Kristallgitter fest eingebaut werden. Sie sind dann festgelegt und können nicht wieder in die Lösung gelangen. Im Zusammenhang mit den weiteren aktiven Substanzen, also Kupfer und Sauerstoff, treten im einzelnen folgende Reaktionen auf, bis die Schwermetalle im Kristallgitter eingebunden sind.

Zunächst adsorbiert die frische Rostschicht die Schwermetalle, die im Abwasser grundsätzlich als Kationen vorliegen. Als Beispiele sind hier die Kationen von Zink (Zn), Kobald (Co), Blei (Pb) und Kadmium (Cd) dargestellt.

Die Schwermetalle difundieren nun in die Rostschicht hinein und werden vom Rost ummantelt.

Dieser Vorgang läßt sich durch die weiteren aktiven Substanzen, im vorliegenden Fall Kupfer, das ein edleres Metall als Eisen darstellt, beschleunigen. Das Kupfer ist hier in Form von Kupferchlorid Cl₂ beigegeben und geht durch die wässerige Lösung über in zweifach positiv geladene Kupferkationen Cu²⁺ und einfach negativ geladene Chlorid Cl-. Die Kupferkationen entreißen dem Eisen zwei Elektronen, wobei dann Kupfer entsteht, welches sich an den Wandungen ablagert. Eisen wird dabei zum zweiwertigen Kation Fe²⁺.

Das Eisenkation ist löslich, geht also ins Wasser über und reagiert dort mit dem gelösten Sauerstoff, der im Abwasser vorhanden ist oder demselben vorher zugesetzt worden ist.

Nach einigen weiteren chemischen Reaktionen entsteht im Endergebnis Rost, der sich dann auf dem Eisenkorn oder an anderer Stelle auf den Ton-Wandungen absetzt. Als aktive Schicht wird somit die gesamte Fläche der Wandungen 16 der Porenkanäle 12 ausgenutzt.

Die frische Rostschicht ist nun wiederum in der Lage, die Schwermetalle zu adsorbieren. Mit der Zeit erfolgt dann die Einlagerung der SM im Kristallgitter der Eisenoxide. Da diese Vorgänge abwechselnd ablaufen, bildet sich eine Art Sandwich-Schicht, d.h. es lagern sich auf den Wandungen 16 immer abwechselnd dünne Schichten aus Rost, Schwermetallen, Rost usw. ab. Das heißt, daß auch die SM, die noch nicht im Kristallgitter der Eisenoxide festgelegt sind, sehr schnell nicht mehr rücktauschbar sind, also nicht mehr in das Abwasser gelangen können. Über die Absorption im Rost hinaus werden die SM durch das zugesetzte Kupferchlorid im Zusammenwirken mit dem Eisenstaub und dem hohen pH-Wert des Trägermediums auf eine noch nicht bekannte Weise ausgefällt. Der anfallende SM-Niederschlag wird in den Poren des Granulats festgehalten.

Der beschriebene Vorgang kann nun solange ablaufen, bis der gesamte Vorrat an metallischem Eisen in der Weise aufgebraucht ist, daß er in Eisenoxid übergegangen ist.

Der Filterkörper muß nun gegen einen unverbrauchten ausgetauscht und entsorgt werden. Dabei bietet es sich an, die Schwermetalle im Recycling-Verfahren wiederzugewinnen und vom Filterkörper zu trennen und damit den Filterkörper für einen erneuten Einsatz vorzubereiten.

Da der Filterkörper einfach herzustellen und aus nahezu unbegrenzt verfügbaren Rohstoffen besteht, eignet er sich zum Einsatz bei der Abwasserreinigung auch kleinerer Gewerbebetriebe.

Ein wirtschaftlicher Anreiz kann auch dadurch geschaffen werden, daß die Abwassergebühr in Abhängigkeit der Reinigungswirkung gestaltet ist. Wird beispielsweise eine so intensive Reinigung durchgeführt, daß das Abwasser (was die SM angeht) Trinkwasserqualität erreicht hat, dann kann die Abwassergebühr auf Null reduziert werden. Das Wasser kann im Betrieb wiederverwendet werden.

Der beschriebene Filterkörper, der hier am Beispiel der Reinigung von Abwässern erläutert wurde, läßt sich auch zur Reinigung von Abgasen verwenden. Dabei können die Poren abwechselnd mit Flüssigkeit benetzt werden, um die Rostbildung zu fördern und dann wieder für den Durchtritt von Abgas freigegeben werden. Eine solche Anwendung kommt z.B. in Frage, wenn der bei der Klärung von Abwässern auftretende schwermetallhaltige Klärschlamm verbrannt wird und die dann in den Abgasen enthaltenen Schwermetalle zurückgehalten werden sollen.

## Patentansprüche

1. Filterkörper, **gekennzeichnet durch** einen Trägerkörper (10) mit einer Vielzahl durchgehender Porenkanäle (12) und chemisch und/oder biologisch aktiven Substanzen (14), die an den Wandungen (16) der Porenkanäle (12) ein- bzw. angelagert sind und wenigstens mit einem Teil ihrer Oberfläche (18) freiliegen, wobei der Trägerkörper (10) aus Ton oder aus Gips, Quarzmehl, Glasmehl, Glas und Zuschlagsstoffen, z. B. Zement und/oder Kalk besteht, wobei ferner der Trägerkörper (10) zur Porenbildung aufgebläht ist, und wobei die chemisch aktiven Substanzen (14) Eisenstaub enthalten, mit einer Korngröße des Eisenstaubes von kleiner als 200 µm.

2. Filterkörper nach Anspruch 1, **dadurch gekennzeich****net**, daß der Trägerkörper (10) durch ein aufschäumbares Material gebildet ist.

3. Filterkörper nach einem oder mehreren der vorhergehenden Ansprüche 1 - 2, **dadurch gekennzeichnet**, daß die in die Wandungen (6) eingelagerten chemisch aktiven Substanzen (14) Kupfersalz und/oder Sauerstoff umfassen.

4. Filterkörper nach einem oder mehreren der vorhergehenden Ansprüche 1 - 3, **dadurch gekennzeichnet**, daß neben den eingelagerten Substanzen (14) auch frei bewegliche chemisch aktive Substanzen, wie Kupfersalz und/oder Sauerstoff vorgesehen sind, die z. B. mit dem zu filternden Medium eingebracht werden.

5. Verfahren zur Herstellung eines Filterkörpers, **da****durch gekennzeichnet**, daß ein Grundstoffgemisch, Ton mit Zement oder Kalk, mit chemisch und/oder biologisch aktiven Substanzen (wie Eisenstaub einer Korngröße kleiner 10 µm) versetzt wird und das ganze aufgeschäumt und gehärtet wird.

6. Verfahren nach Anspruch 5, **dadurch gekennzeichnet,** daß dem Grundstoffgemisch Aluminiumpulver im Mengenanteil von vorzugsweise 0,5 % beigegeben wird.

7. Verfahren nach Anspruch 5, **dadurch gekennzeichnet,** daß das Gemisch einer Mikrowellenbestrahlung zum Aufschäumen ausgesetzt wird.

8. Verfahren nach Anspruch 5, **dadurch gekennzeichnet,** daß das Grundgemisch unter Vakuum aufgeschäumt wird.

9. Verfahren nach einem oder mehreren der vorhergehenden Ansprüche 5 - 8, **dadurch gekennzeichnet,** daß dem Grundgemisch Wasserglas im Mengenanteil von 1 - 2 % beigegeben wird.

## Claims

1. Filter body, characterized by a support body (10) comprising a plurality of continuous pore channels (12) and chemically and/or biologically active substances (14), which are embedded in and/or deposited on the walls (16) of the pore channels (12) and are exposed with at least a portion of their surface (18), the support body (10) being of clay or of gypsum, quartz dust, glass dust, glass and admixtures, e.g. cement and/or lime, and the support body (10) furthermore being expanded to form pores, and the chemically active substances (14) containing iron dust having a particle size of the iron dust of less than 200 µm.

2. Filter body according to Claim 1, characterized in that the support body (10) is formed of a foamable material.

3. Filter body according to one or more of the preceding Claims 1 and 2, characterized in that the chemically active substances (14) embedded in the walls (6) comprise copper salt and/or oxygen.

4. Filter body according to one or more of the preceding Claims 1 to 3, characterized in that, in addition to the embedded substances (14), freely movable chemically active substances, such as copper salt and/or oxygen, are provided, which are introduced for example with the medium to be filtered.

5. Method of making a filter body, characterized in that a basic materials mixture, clay with cement or lime, has chemically and/or biologically active substances (such as iron dust of a particle size less than 10 µm) added to it, and the whole is foamed and hardened.

6. Method according to Claim 5, characterized in that aluminium powder in a proportion of preferably 0.5% is added to the basic substance mixture.

7. Method according to Claim 5, characterized in that the mixture is subjected to a microwave irradiation for foaming it.

8. Method according to Claim 5, characterized in that the basic mixture is foamed under vacuum.

9. Method according to one or more of the preceding Claims 5 to 8, characterized in that water glass in a proportion of 1 to 2% is added to the basic mixture.

## Revendications

1. Corps de filtre caractérisé par un substrat (10) comportant une pluralité de canaux poreux (12) qui le traversent et des substances actives chimiques et/ou biologiques (14) qui sont déposées ou fixées sur les parois (16) des canaux poreux (12) dont au moins une partie de leur surface (18) est nue, le substrat (10) consistant en argile ou en gypse, en poudre de quartz, en poudre de verre, en verre et en matière supplémentaire, par exemple du ciment et/ou de chaux, le substrat (10) étant encore gonflé pour former des pores, et les substances actives chimiques (14) contenant de la poudre de fer, la granulométrie de la poudre de fer ne dépassant pas 200 micromètres.

2. Corps de filtre suivant la revendication 1, caractérisé en ce que le substrat (10) est formé par un matériau capable de mousser.

3. Corps de filtre suivant l'une ou plusieurs des revendications précédentes 1 et 2, caractérisé en ce que les substances actives chimiques (14) déposées dans les parois (6) comprennent un sel de cuivre et/ou de l'acide.

4. Corps de filtre suivant l'une ou plusieurs des revendications précédentes 1 à 3, caractérisé en ce qu'auprès des substances (14) déposées, sont aussi prévues des substances actives chimiques mobiles librement qui sont, par exemple, introduites avec le milieu à filtrer.

5. Procédé pour fabriquer un corps de filtre, caractérisé en ce qu'un mélange de matières premières, argile avec ciment ou chaux, avec des substances actives chimiques et/ou biologiques (comme de la poudre de fer d'une granulométrie inférieure à 10 micromètres) est mélangé et qu'on fait mousser et durcir le tout.

6. Procédé suivant la revendication 5, caractérisé en ce qu'au mélange de matières premières est ajoutée de la poudre d'aluminium en partie pondérale, de préférence, égale à 0,5 %

7. Procédé suivant la revendication 5, caractérisé en ce que le mélange est exposé à un rayonnement micro-ondes pour le faire mousser.

8. Procédé suivant la revendication 5, caractérisé en ce que le mélange de base est rendu moussant sous vide.

9. Procédé suivant l'une ou plusieurs des revendications précédentes 5 à 8, caractérisé en ce qu'au mélange de base est ajouté du verre soluble en quantité pondérale allant de 1 à 2 %.
